# EUROPÄISCHE PATENTSCHRIFT

(11) **EP 3 368 241 B1**
(45) Veröffentlichungstag und Bekanntmachung des Hinweises auf die Patenterteilung: **15.05.2019**
(21) Anmeldenummer: 16808550.4
(22) Anmeldetag: 31.10.2016
(51) Int. Cl.: B23K 20/12

(54) **RUEHRREIBSCHWEISSWERKZEUG**
FRICTION STIR WELDING TOOL
OUTIL DE SOUDAGE PAR FRICTION MALAXAGE

(30) Priorität: 30.10.2015 AT 7022015
(43) Veröffentlichungstag der Anmeldung: 05.09.2018
(73) Patentinhaber: Technische Universität Wien, 1040 Wien (AT); Stirtec GmbH, 8141 Premstätten (AT)
(72) Erfinder: GIERL-MAYER, Christian, 1060 Wien (AT); DANNINGER, Herbert, 1060 Wien (AT); WEINBERGER, Thomas, 8047 Graz (AT); FIGNER, Gunter, 8010 Graz (AT)
(74) Vertreter: Ellmeyer, Wolfgang
(86) Internationale Anmeldenummer: PCT/AT2016/060093
(87) Internationale Veröffentlichungsnummer: WO 2017/070725

(56) Entgegenhaltungen:
- EP-A1- 2 149 437
- WO-A2-2008/102209
- DE-A1-102005 018 674
- US-A1- 2004 238 599

## Beschreibung

Die vorliegende Erfindung betrifft Rührreibschweißwerkzeuge aus hochtemperaturbeständigen Metallen oder Legierungen.

### STAND DER TECHNIK

Rührreibschweißen ist ein seit etwa zwei Jahrzehnten bekanntes Schweißverfahren, bei dem ein Werkzeug, bestehend aus einem rotationssymmetrischen, üblicherweise zylindrischen Schaft, der an einem Ende von einem Schulterbereich des Schafts ausgehend einen vorragenden Stift mit geringerem Durchmesser aufweist, mit dem stiftseitigen Ende an zu verbindende Werkstücke angestellt und in Rotation versetzt wird. Durch die Rotation des Stiftes und des angrenzenden Schulterbereiches und die dadurch entstehende Reibungswärme werden die Materialien der zu verbindenden Werkstücke erwärmt und teigig gemacht. Sobald die Materialien der zu verbindenden Werkstücke genügend teigig sind, sorgt der Stift für eine innige Durchmischung der Materialien der zu verbindenden Werkstücke im Verbindungsbereich. Sodann, wenn die Werkstücke im Bereich der Eingriffszone des Stiftes abkühlen, entsteht eine im Vergleich mit konventionellen Schweißverfahren verbesserte Schweißstelle, die insbesondere frei von Poren und/oder unerwünschten Gefügeausbildungen sein kann. Dieses Verfahren umgeht mehrere Nachteile von Schmelzschweißverfahren, da es ein Festphasenprozess ist und damit die bekannten Probleme wie Grobkornbildung in der Schweißnaht, Schrumpfungseffekte beim Erstarren der Schmelze und ungünstige Gefüge in der Wärmeeinflusszone vermieden werden.

Wiewohl noch eine junge technologische Entwicklung, wird Rührreibschweißen bereits in vielen Anwendungsgebieten eingesetzt, vor allem zum Schweißen von Werkstücken aus niedrig schmelzenden Materialien, beispielsweise Aluminiumlegierungen. Für Leichtmetalle, insbesondere Bleche, wurde das Verfahren auch in der Luft- und Raumfahrt, die bekanntlich hohe Ansprüche bezüglich Qualität und Zuverlässigkeit stellt, eingeführt.

In jüngerer Zeit wird auch versucht, die durch das Rührreibschweißen erzielten Vorteile beim Schweißen von höher schmelzenden Materialien, beispielsweise Stahl, zu erzielen. Ein Problem besteht allerdings bislang darin, dass sich die eingesetzten Rührreibschweißwerkzeuge bei den hohen Schweißtemperaturen oftmals verformen bzw. rasch verschleißen. Des Weiteren kann im Schweißprozess auch ein Ablösen bzw. Abbrechen des Stiftes bzw. Pins vom Schaft auftreten oder der Schaft selbst brechen.

Die von den Werkzeugen geforderte Kombination aus hoher Warmhärte, Warmfestigkeit und Zähigkeit, insbesondere bei Umlaufbiegebelastungen, sowie Warmverschleißfestigkeit werden derzeit von kommerziell leistbaren Materialien nicht erreicht, weshalb die Standzeiten und Standwege der Werkzeuge untragbar kurz sind. Im Gegensatz zu Werkzeugen für das Schweißen von Aluminium erreichen diese Werkzeuge oft nur Standwege von wenigen Metern.

Die für das Rührreibschweißen von Aluminium verwendeten Warmarbeitsstähle versagen bei den sehr viel höheren Temperaturen, die beim Rührreibschweißen von Eisen- und Stahlwerkstoffen auftreten. Auch Wolframcarbid-Kobalt-Hartmetalle versagen aufgrund von Erweichung des Kobaltbinders. Wolfram-Rhenium-Legierungen zeigen interessantes Potential; aufgrund des sehr hohen Preises für Rhenium ist diese Lösung aber kommerziell nicht umsetzbar. Andere Refraktärmetalle wie etwa Molybdän zeigen zwar die geforderte Warmfestigkeit, weisen aber einen hohen Verschleiß auf, was sich negativ auf die Prozesssicherheit auswirkt. Grundsätzlich haben aber Refraktärmetalle im Vergleich zu Keramik oder Hartmetall den Vorteil, dass die Kontur nach einem entsprechenden Verschleiß wieder nachbearbeitet und das Werkzeug somit mehrmals wiederverwendet werden kann.

Neben den klassischen Versagensmechanismen wie abrasiver Verschleiß oder Ermüdungsbruch ist die chemische Wechselwirkung zwischen Werkzeug und den zu verbindenden Werkstücken ein wichtiger Faktor, der allerdings in der Literatur kaum beachtet wird. Die hohe Relativgeschwindigkeit der beteiligten Komponenten, in Kombination mit den hohen Temperaturen und aufgebrachten Drücken, führt zu tribochemischen Reaktionen, primär chemischen Wechselwirkungen zwischen den Partnern, die sowohl Werkzeug als auch Werkstück schädigen können.

Die häufigste tribochemische Reaktion, Tribooxidation durch Reaktion der beteiligten Komponenten mit dem umgebenden Luftsauerstoff, kann durch Führung des FSW-Prozesses unter Inertgas verhindert werden. Nicht verhindern lassen sich aber Interdiffusion der Komponenten von Werkzeug und Werkstücken bzw. Reaktionen miteinander. Dies führt zu Anhaften und Anschweißen von Werkstückmaterial am Werkzeug. Beim Losreißen dieser Anhaftungen im Verlauf des weiteren Prozesses wird auch Werkzeugmaterial mit losgerissen und die Werkzeugoberfläche damit fortschreitend zerrüttet. Solche Effekte treten z.B. bereits beim Rührreibschweißen von Aluminium mit Werkzeugen aus Warmarbeitsstahl ab einer gewissen Einsatzdauer auf und führen zum raschen Ausfall des Werkzeuges.

Auch klassische chemische Reaktionen von Werkzeugkomponenten mit den Werkstücken sind zu berücksichtigen. So zersetzt sich beispielsweise das in der Patentliteratur als "superabrasive" bezeichnete und wegen seiner hohen Härte und Verschleißbeständigkeit für Rührreibschweißwerkzeuge empfohlene kubische Bornitrid (vgl. US 2002/011509 A1) in Kontakt mit Metalloberflächen unter Rührreibschweiß-Bedingungen oft sehr rasch. Dies ist z.B. für das Rührreibschweißen von Ti-Werkstoffen mit cBN-haltigen Werkzeugen eindeutig nachgewiesen [Y. Zhang, Y.S. Sato, H. Kokawa, S.H.C. Park und S. Hirano, "Stir zone microstructure of commercial purity titanium friction stir welded using pcBN tool", Materials Science and Engineering A, 488, 25-30 (2008)].

Ein weiterer Gesichtspunkt ist die Kontamination der Rührreibschweißnähte mit aus dem Werkzeug abgetragenem Material. Da dieser Abtrag systembedingt nicht ganz zu vermeiden ist, sind solche Werkzeugmaterialien wünschenswert, die in den zu verbindenden Werkstücken keine negativen Effekte auf mechanische bzw. chemische Eigenschaften hervorrufen (wie z.B. versprödende Fremdphasen), indem sie im Basisgitter als Mischkristall gelöst werden. Bei der Verwendung von pcBN-Werkzeugen für das Schweißen von Stahl konnten im Bereich der Rührzone des Werkstoffs σ-Phasen und Cr-reiche Boride gefunden werden. Speziell bei austenitischen Stählen verringert sich dadurch die Korrosionsbeständigkeit in der Schweißnaht, was jedoch unbedingt vermieden werden soll [Y. S. Sato, M. Muraguchi, H. Kokawa, "Tool Wear and Reactions in 304 Stainless Steel during Friction Stir Welding", Materials Science Forum, Bd. 675-677, S. 731-734 (Feb. 2011)].

Zur Verbesserung der mechanischen Eigenschaften des Werkzeugwerkstoffs, vor allem bei hohen Temperaturen, können mittels für monolithische Refraktärmetalle an sich bekannter Techniken gefügestabilisierende Dispersoide, d.h. feine Carbide, Oxide, Nitride oder Boride mit einem mittleren Teilchendurchmesser im Nanometerbereich, also < 1 µm, zugesetzt werden, die die Warmhärte und Warmfestigkeit erhöhen und die Tendenz von insbesondere Mo und auch W zur Gefügevergröberung bei höheren Temperaturen verringern [siehe z.B. G. Leichtfried, G. Thurner, R. Weirather, Proc.14th Int. Plansee Seminar, Reutte, Bd. 4, S. 26-43 (1997)].

Weiters werden Carbide und andere hochtemperaturbeständige Materialien in gewissen Mengen zugesetzt, um die Warmfestigkeit zu erhöhen und den Verschleiß zu verringern. So wird etwa in GB 2.402.905 A aus 2004 ein oben beschriebenes Rührreibschweißwerkzeug aus Wolfram oder einer Wolfram-basierten Legierung offenbart, das vorzugsweise ein die Festigkeit erhöhendes Material, ausgewählt aus Rhenium, Molybdän, Tantal und Niob, insbesondere Rhenium in fester Lösung, vorzugsweise in einer Menge von etwa 40 Gew.-%, umfasst und darüber hinaus auch ein oder mehrere Refraktärcarbide in einer Konzentration von etwa 0,25 bis etwa 2 Gew.-% umfassen kann. Als Beispiele für Letzteres werden Carbide von Hafnium, Zirconium, Tantal und Niob genannt. Die Herstellung erfolgt u.a. mittels kaltisostatischem Pressen.

In EP 2.076.352 B1 und der zugrunde liegenden WO 2008/102209 A2 wird ein Rührreibschweißwerkzeug mit einem Schulterabschnitt aus gegebenenfalls legiertem W, Mo, Ta, Nb und/oder Hf und einem Stiftabschnitt aus einem oder mehreren von Mo, W, Hf, Zr, Ta, Rh, Nb, Ir, V, Legierungen, Carbiden und Oxiden davon beschrieben, wobei Letzterer insbesondere 0,001 bis 5 Gew.-% Carbide und/oder Nitride von La, Hf und/oder Zr umfasst. Beide Abschnitte können zudem eine Beschichtung aufweisen, so z.B. eine Beschichtung aus Ruthenium, Siliciden oder Carbiden. Allerdings liegen etwaige Oxide und Carbide vor allem oberflächlich und mitunter bloß in der Beschichtung des entsprechenden Abschnitts vor und werden beispielsweise durch Magnetron-Sputtern oder Thermospraying hergestellt. Teilchengrößen solcher Oxide und Carbide werden nicht angegeben.

In US 2014/299651 A1 werden Rührreibschweißwerkzeuge auf Mo-Basis offenbart, die analog zur obigen GB 2.402.905 A gegebenenfalls ein oder mehrere Refraktärcarbide von Hf, Zr, Ta und/oder Nb umfassen. Weder werden jedoch die Mengen dieser Refraktärcarbide näher spezifiziert, noch werden Teilchengrößen angegeben.

Der Zweck dieser bekannten Zusätze von Carbiden und Oxiden, die üblicherweise Teilchengrößen < 1 µm aufweisen ("Dispersoide"), ist, wie eingangs erwähnt, eine Stabilisierung des Gefüges bzw. die Erhöhung der Temperaturbeständigkeit der jeweiligen Basislegierung. Nennenswerte Auswirkungen auf die Verschleißfestigkeit oder den Reibwert des Werkzeugs gehen davon freilich nicht aus.

Zu letzterem Zweck offenbaren als einzige den Erfindern bekannte Dokumente die US 2002/011509 A1 und weitere Mitglieder der Patentfamilie ein Rührreibschweißwerkzeug mit einer Beschichtung aus einem Abrasivstoff, konkret aus polykristallinem kubischem Bornitrid (PCBN) oder polykristallinem Diamant (PCD) mit Teilchengrößen im Bereich von unter 1 µm bis zu 50 µm umfasst. Durch eine solche Beschichtung mit Abrasivstoff soll allerdings die Reibung zwischen dem Werkzeug und dem Werkstück nicht erhöht, sondern im Gegenteil aufgrund des niedrigeren Reibwerts von PCBN und PCB im Vergleich zu beispielsweise Stahl sogar gesenkt werden, gleichzeitig soll jedoch die Wärmeableitung erhöht sein (siehe die Absätze [0098] und [0099] der US 2002/011509 A1). Zur Aufrechterhaltung einer ausreichenden Temperatur an der Schweißstelle können daher mitunter Wärmesperren unterhalb der Abrasivstoff-Beschichtung vorgesehen werden. Als Verfahren zur Herstellung solcher Beschichtungen werden chemische und physikalische Gasphasenabscheidung (CVD, PVD) sowie Ionenimplantation genannt. Allerdings wird in US 2002/ 011509 A1 kein einziges konkretes Ausführungsbeispiel für ein solches Rührreibschweißwerkzeug offenbart, weswegen die dortige Erfindung und Offenbarung rein theoretischer Natur zu sein scheinen.

Nachteilig an solchen Rührreibschweißwerkzeugen ist bzw. wäre jedoch - neben der Notwendigkeit von Wärmesperren - der weiterhin hohe Verschleiß aufgrund mangelnder chemischer Stabilität der Abrasivstoff-Beschichtungen, wie die Erfinder im Verlauf ihrer Forschungen festgestellt haben.

Ziel der Erfindung war vor diesem Hintergrund die Bereitstellung eines Rührreibschweißwerkzeugs, mit dem die obigen Nachteile zumindest teilweise ausgemerzt werden können.

### OFFENBARUNG DER ERFINDUNG

Dieses Ziel erreicht die vorliegende Erfindung in einem ersten Aspekt durch Bereitstellung eines Rührreibschweißwerkzeugs, umfassend einen rotationssymmetrischen Schaft mit einem zum Kontakt mit Fügepartnern bestimmten proximalen Ende und einem gegenüberliegenden distalen Ende sowie einem konzentrisch um die Rotationsachse angeordneten Stift, der einen geringeren Durchmesser als der Schaft an seinem proximalen Ende aufweist und somit gegenüber einem dadurch definierten Schulterbereich des Schafts hervorragt, wobei der Schaft zumindest in diesem Schulterbereich sowie der Stift jeweils aus einem Material, ausgewählt aus hochtemperaturbeständigen Metallen und Legierungen, bestehen, das gegebenenfalls gefügestabilisierende Dispersoide, z.B. Carbide, Oxide, Nitride oder Boride, mit einem Teilchendurchmesser im Nanometerbereich enthält,
mit dem Kennzeichen, dass
der Stift und/oder der Schaft im Schulterbereich aus einem Verbundwerkstoff bestehen/besteht oder damit beschichtet sind/ist, der
a) im Wesentlichen aus Molybdän, Wolfram, Niob oder Tantal oder aus einer auf zumindest einem dieser Metalle basierenden Legierung besteht; und
b) eine darin eingebettete Verstärkungsphase aus zumindest einem Hartstoff mit einer Mohshärte ≥ 6, einer Teilchengröße im Mikrometerbereich und einer freien Bildungsenthalpie bei 1300 K von unter -350 kJ/mol O₂ umfasst.

Durch das Miteinbeziehen der erfindungsgemäßen Verstärkungsphase in ein im Wesentlichen aus Molybdän, Wolfram, Niob und/oder Tantal bestehendes Rührreibschweißwerkzeug bzw. eine Beschichtung des Werkzeugs im Schulterbereich kann die Verschleißfestigkeit des Werkzeugs gegenüber dem Stand der Technik erheblich gesteigert werden. Durch das Einbetten der relativ grobkörnigen Partikel der Verstärkungsphase, die vorzugsweise einen oder mehrere Hartstoffe mit einer Teilchengröße im Bereich von 3 bis 200 µm, vorzugsweise 5 bis 200 µm, noch bevorzugter 10 bis 200 µm, umfasst, sind diese in der Metallbasis gleichmäßig verteilt und gegen Ausbrechen deutlich besser gesichert, als dies bei nur oberflächlich generierten Hartstoffen nach dem Stand der Technik der Fall ist. Die gegenüber Dispersoiden um mehrere Zehnerpotenzen erhöhte Korngröße bewirkt darüber hinaus eine noch wesentlich stärkere Vergrößerung der Oberfläche, was die mechanische Stabilität des Verbunds erheblich steigert und drastisch verlängerte Standzeiten des Werkzeugs nach sich zieht. Das durch die stark negative freie Bildungsenthalpie (negativer als -350 kJ/mol 0₂) bedingte chemisch inerte Verhalten des Hartstoffs gegenüber den zu fügenden Werkstücken verringert die Tendenz zum Anschweißen von Werkstückmaterialien am Werkzeug deutlich und minimiert dadurch die damit verbundene Schädigung sowie die Bildung von unerwünschten Phasen nach Eintrag in den zu fügenden Werkstoff.

Von den aufgrund ihrer hohen Schmelzpunkte von über 2300 K als Basis für den erfindungsgemäßen Verbundwerkstoff geeigneten Metallen und Legierungen davon, d.h. Mo, W, Nb und Ta (und prinzipiell auch Os, das aufgrund seines hohen Preises jedoch kaum Berücksichtigung finden wird), werden Mo, W und darauf basierende Legierungen aufgrund ihrer geringen Löslichkeit sowohl für als auch in Eisen und Aluminium, zwei der häufigsten Komponenten in den Fügepartnern bem Rührreibschweißen, sowie der niedrigen Diffusionskoeffizienten und -geschwindigkeiten der einzelnen Metalle in solchen Kombinationen als Hauptbestandteile des Verbundmaterials besonders bevorzugt, da so die Bildung unerwünschter Phasen und das Anschweißen von Werkstückmaterial am Werkzeug weiter verringert werden können.

In bevorzugten Ausführungsformen ist der zumindest eine Hartstoff in dem Material in einem Anteil von 5 bis 30 Vol.-%, vorzugsweise 10 bis 20 Vol.-%, und somit in einer Menge enthalten, die weit über jener liegt, in der bisher feinkörnige Hartstoffe als Dispersoide zum Einsatz gekommen sind, und die die verschleißhemmende Wirkung der Erfindung weiter verstärkt.

Der zumindest eine Hartstoff der Verstärkungsphase ist vorzugsweise aus Aluminiumoxid, Zirkoniumoxid, Yttriumoxid und Gemischen davon ausgewählt, da diese Materialien eine besonders hohe thermodynamische Stabilität aufweisen und dadurch mit den Werkstückmaterialien wie Stahl, Rostfreistahl, Aluminium- und Superlegierungen nicht oder nur minimal reagieren. Die in der eingangs erwähnten US 2002/ 011509 A1 offenbarten Abrasivstoffe PCBN und PCD sind trotz ihrer besonders hohen Härte für Werkzeuge gemäß vorliegender Erfindung gänzlich ungeeignet, da sie eine (viel) zu hohe Bildungsenthalpie aufweisen (Standardbildungsenthalpie ΔH_{f}⁰: Bornitrid -254,4 kJ/mol, Diamant +1,9 kJ/mol; ΔH_{f} für CBN bei 1300 K: ≈ -265 kJ/mol) und daher beim Rührreibschweißen (sehr) leicht Reaktionen mit dem Material der Fügepartner eingehen.

Weiters kann das Material des erfindungsgemäßen Rührreibschweißwerkzeugs in an sich bekannter Weise Dispersoide mit Teilchendurchmessern im Nanometerbereich in einer Menge von bis zu 5 Gew.-% umfassen, um sich die gefügestabilisierende Wirkung dieser Zusätze zunutze zu machen.

Die Anordnung des Verbundwerkstoffs in bzw. auf dem erfindungsgemäßen Werkzeug ist nicht speziell eingeschränkt, und es können sowohl der Stift als auch der Schulterbereich oder auch der gesamte Schaft, d.h. das gesamte Werkzeug, aus dem Verbundwerkstoff bestehen. Hauptsächlich aus Kostengründen werden jedoch nur Teile des Werkzeugs, vorzugsweise der Stift, zur Gänze aus dem Verbundwerkstoff bestehen, während andere Teile, vorzugsweise der Schulterbereich des Schafts, lediglich mit einer aus dem Verbundwerkstoff bestehenden Schicht überzogen sein werden. Besonders bevorzugt ist der Verbundwerkstoff an all jenen Teilen vorgesehen, die während des Schweißvorgangs mit den Fügepartnern in Kontakt kommen.

Die Herstellung des erfindungsgemäßen Werkzeugs kann über an sich bekannte pulvermetallurgische Methoden, beispielsweise analog zur Herstellung der industriell hergestellten Werkstoffe TZM oder MHC, erfolgen, so dass die neuen Werkzeuge in bestehenden Fertigungsanlagen hergestellt werden können. Ein exemplarisches Verfahren wird in den späteren Beispielen angeführt.

In einem zweiten Aspekt stellt die Erfindung die Verwendung des Rührreibschweißwerkzeugs gemäß dem ersten Aspekt in einem Schweißverfahren bereit, d.h. ein Verfahren zum Rührreibschweißen, das dadurch gekennzeichnet ist, dass als Werkzeug ein solches Rührreibschweißwerkzeug eingesetzt wird.

### KURZBESCHREIBUNG DER ZEICHNUNGEN

In den nachfolgenden Beispielen wird die vorliegende Erfindung unter Bezugnahme auf die beiliegenden Zeichnungen näher beschrieben, die Folgendes zeigen.
Fig. 1 ist eine Fotografie der Oberfläche eines Rührreibschweißwerkzeugs nach dem Stand der Technik aus Vergleichsbeispiel 1.
Fig. 2 ist eine Fotografie der Oberfläche eines Rührreibschweißwerkzeugs nach dem Stand der Technik aus Vergleichsbeispiel 2.
Fig. 3 ist eine Fotografie der Oberfläche eines erfindungsgemäßen Rührreibschweißwerkzeugs aus Beispiel 1.

### BEISPIELE

### Allgemeine Verfahrensbeschreibung

Im nachstehenden Vergleichsbeispiel und einem Beispiel für die vorliegenden Erfindung wurden zunächst nach demselben allgemein bekannten Verfahren Rührreibschweißwerkzeuge hergestellt, wobei das Verfahren Folgendes umfasste:
- Mischen des Basis-Metallpulvers mit dem Hartstoffpulver (wobei optionale Dispersoide gegebenenfalls davor mit Letzterem vermischt werden), z.B. mittels Taumelmischer für 30 min;
- Konsolidieren der Pulvermischung durch kaltisostatisches Pressen, z.B. bei 300 MPa;
- Vorsintern in reduzierender Atmosphäre, z.B. in Wasserstoff bei 1.200 °C für 60 min;
- Kapseln in gasdichte Stahlbehälter, Evakuieren und Verschweißen;
- heißisostatisches Verdichten, z.B. bei 1.300 °C;
- Entfernen der Kapsel durch spangebende Bearbeitung (Abdrehen);
- Warmumformung, z.B. Warmwalzen bei 1.200 °C Vorwärmtemperatur;
wobei die beiden letzten Schritte auch in der umgekehrten Reihenfolge durchgeführt werden können.

Die so erhaltenen Werkzeuge wurden anschließend einem Standzeitversuch unterzogen. Dazu wurden unterschiedliche Werkzeugmaterialien unter gleichen Rahmenbedingungen an einer Aluminiumlegierung getestet. Die Schweißparameter waren für alle Werkzeuge identisch und orientierten sich an einer konkreten Industrieanwendung. Nach einem gewissen Schweißweg wurden die Werkzeuge auf Verschleiß untersucht.

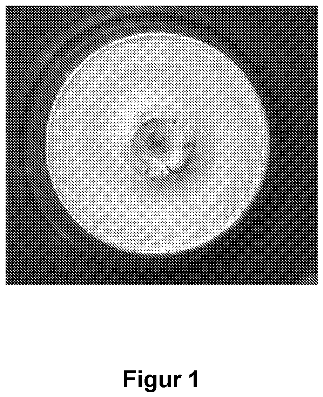

Die dabei erhaltenen Oberflächen wurden visuell überprüft und verglichen. Fotografien der jeweiligen Oberflächen werden in den beiliegenden Figuren 1 bis 3 gezeigt.

### Vergleichsbeispiele 1 und 2

In diesen Beispielen wurden Werkzeuge einerseits aus dem Warmarbeitsstahl EN X40CrMoV5-1, der im Anschluss noch auf 54 HRC gehärtet wurde (Vergleichsbeispiel 1) und andererseits aus Inconel® Alloy 718, NiCr19NbMo, einer Nickelbasislegierung (Vergleichsbeispiel 2) gefertigt. Diese Werkstoffe werden in der Fachliteratur häufig für den Einsatz als Rührreibschweißwerkzeuge genannt (siehe z.B. Y.N. Zhang, X. Cao*, S. Larose und P. Wanjara, "Review of tools for friction stir welding and processing", Can. Metall. Quart. 51(3), 250-261 (2012)).

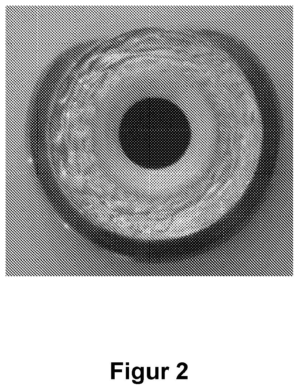

Fotografien der dabei erhaltenen Oberflächen der Werkzeuge werden in den Fig. 1 bzw. 2 gezeigt.

Aus Fig. 1, einer Aufnahme des Rührreibschweißwerkzeugs aus Vergleichsbeispiel 1 nach 650 m Schweißweg, ist ganz klar die Bildung von Rattermarken auf der Schulter ersichtlich. Diese Rattermarken bilden sich aufgrund der schlechten chemischen Beständigkeit des Werkzeugmaterials während des Rührreibschweißprozesses in Kontakt mit dem Werkstückmaterial. Durch die Rührbewegung bildet sich lokal ein Materialverbund aus Anteilen des Werkzeugs und des Werkstücks, wodurch Volumenanteile des Werkzeugmaterials aus dem Werkzeug herausgerissen werden. Fig. 1 zeigt neben den Rattermarken auch diesen Volumenverlust ganz deutlich.

In Fig. 2 ist die korrespondierende Oberfläche des Rührreibschweißwerkzeugs aus Vergleichsbeispiel 2 nach 400 m Schweißweg dargestellt. Auch hier sind entsprechende Rattermarken und der chemische Verschleiß ganz deutlich zu erkennen.

### Beispiel 1

Ein illustratives Rührreibschweißwerkzeug der vorliegenden Erfindung wurde nach dem obigen Verfahren aus den folgenden Komponenten hergestellt:
- Molybdänpulver (Ø < 32 µm);
- 10 Vol.-% Schmelzkorund (blockig, Ø 25-63 µm);
   0,5 Masse-% HfC (Ø <1 µm; Dispersoid).

Das so erhaltene erfindungsgemäße Rührreibschweißwerkzeug wurde einem analogen Test wie die Werkzeuge aus den Vergleichsbeispielen unterzogen.

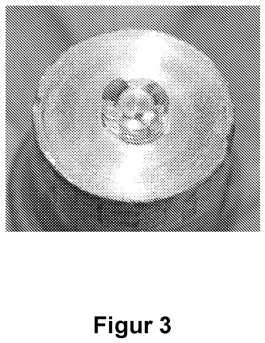

Fig. 3 ist eine Fotografie der Oberfläche des Werkzeugs der Erfindung nach 1500 m Schweißweg. Hier ist im Gegensatz zum Stand der Technik nur relativ geringfügiger abrasiver Verschleiß erkennbar. Aufgrund der besseren chemischen Beständigkeit waren auch kaum Wechselwirkungen mit dem Werkstück aufgetreten.

Durch die Erfindung werden somit in ihrer chemischen Stabilität deutlich verbesserte Rührreibschweißwerkzeuge bereitgestellt, die außerordentliche wirtschaftliche Vorteile auf dem Gebiet des Rührreibschweißens bieten.

Ein solches erfindungsgemäßes Werkzeug ermöglicht somit deutlich höhere Standzeiten, als sie nach dem Stand der Technik erreichbar waren.

## Patentansprüche

1. Rührreibschweißwerkzeug, umfassend einen rotationssymmetrischen Schaft (1) mit einem zum Kontakt mit Fügepartnern bestimmten proximalen Ende (1a) und einem gegenüberliegenden distalen Ende (1b) sowie einem konzentrisch um die Rotationsachse angeordneten Stift (2), der einen geringeren Durchmesser als der Schaft an seinem proximalen Ende (1a) aufweist und somit gegenüber einem dadurch definierten Schulterbereich (3) des Schafts hervorragt, wobei der Schaft zumindest in diesem Schulterbereich (3) sowie der Stift (2) jeweils aus einem Verbundwerkstoff bestehen/besteht oder damit beschichtet sind/ist, der eine im Wesentlichen aus Molybdän, Wolfram, Niob oder Tantal oder aus einer auf zumindest einem dieser Metalle basierenden Legierung bestehende Metallbasis und in die Metallbasis eingebettete Hartstoff-Partikel mit einer Mohshärte ≥ 6 umfasst; wobei die in die Metallbasis eingebetteten Hartstoff-Partikel zumindest einen Hartstoff umfassen, der in der Metallbasis eine Verstärkungsphase bildet, und eine freie Bildungsenthalpie bei 1300 K aufweist, die negativer als-350 kJ/mol 0₂ ist **dadurch gekennzeichnet, dass** der Hartstoff eine Teilchengröße im Mikrometerbereich, d.h. mit einem mittleren Teilchendurchmesser ab 1 µm, aufweist.

2. Werkzeug nach Anspruch 1, **dadurch gekennzeichnet, dass** die Verstärkungsphase einen oder mehrere Hartstoffe mit einer Teilchengröße im Bereich von 3 bis 200 µm, vorzugsweise 5 bis 200 µm, noch bevorzugter 10 bis 200 µm, umfasst.

3. Werkzeug nach Anspruch 1 oder 2, **dadurch gekennzeichnet, dass** der zumindest eine Hartstoff in dem Material in einem Anteil von 5 bis 30 Vol.-%, vorzugsweise 10 bis 20 Vol.-%, enthalten ist.

4. Werkzeug nach einem der Ansprüche 1 bis 3, **dadurch gekennzeichnet, dass** der zumindest eine Hartstoff der Verstärkungsphase aus Aluminiumoxid, Zirkoniumoxid, Yttriumoxid und Gemischen davon ausgewählt ist.

5. Werkzeug nach einem der vorangegangenen Ansprüche, **dadurch gekennzeichnet, dass** der Verbundwerkstoff im Wesentlichen aus Mo und/oder W oder aus einer darauf basierenden Legierung besteht.

6. Werkzeug nach einem der vorangegangenen Ansprüche, **dadurch gekennzeichnet, dass** das Material Dispersoide mit Teilchendurchmessern im Nanometerbereich in einer Menge von bis zu 5 Gew.-% umfasst.

7. Werkzeug nach einem der vorangegangenen Ansprüche, **dadurch gekennzeichnet, dass** der Stift (2) aus dem Verbundwerkstoff besteht und der Schulterbereich (3) des Schafts (1) mit einer aus dem Verbundwerkstoff bestehenden Schicht überzogen ist.

8. Verfahren zum Rührreibschweißen, **dadurch gekennzeichnet, dass** als Werkzeug ein Rührreibschweißwerkzeug nach einem der Ansprüche 1 bis 7 eingesetzt wird.

## Claims

1. A friction stir welding tool comprising a rotationally symmetrical shaft (1) having a proximal end (1a) intended for contact with joint partners and a distal end (1b) opposed thereto, and a pin (2), which is arranged concentrically about the rotation axis and which has a smaller diameter than the shaft at the proximal end (1a) thereof and thus projects as compared to a thereby defined shoulder region (3) of the shaft, wherein the shaft, at least in the shoulder region (3), and the pin (2) each consist of or are coated with a compound material, which comprises a metal base substantially consisting of molybdenum, tungsten, niobium, or tantalum, or of an alloy based on at least one of these metals, and hard material particles being embedded in this metal base and having a Mohs hardness ≥ 6;
wherein the hard material particles embedded in the metal base comprise at least one hard material which forms a reinforcement phase in the metal base and has a free enthalpy of formation at 1300 K that is more negative than -350 kJ/mol O₂,
**characterized in that** said hard material has a particle size in the micrometer range, i.e. an average particle diameter of 1 µm or more.

2. The tool according to claim 1, **characterized in that** the reinforcement phase comprises one or more hard materials having particle sizes in the range of 3 to 200 µm, preferably 5 to 200 µm, more preferably 10 to 200 µm.

3. The tool according to claim 1 or 2, **characterized in that** the at least one hard material is contained in the material at a percentage of 5 to 30 % by volume, preferably 10 to 20 % by volume.

4. The tool according to any one of the claims 1 to 3, **characterized in that** the at least one hard material of the reinforcement phase is selected from aluminum oxide, zirconium oxide, yttrium oxide, and mixtures thereof.

5. The tool according to any one of the preceding claims, **characterized in that** the compound material substantially consists of Mo and/or W, or of an alloy based thereon.

6. The tool according to any one of the preceding claims, **characterized in that** the material comprises dispersoids having particle diameters in the nanometer range, in an amount of up to 5 % by weight.

7. The tool according to any one of the preceding claims, **characterized in that** the pin (2) consists of the compound material, and the shoulder region (3) of the shaft (2) is coated with a layer consisting of the compound material.

8. A friction stir welding process, **characterized in that** the friction stir welding tool according to any one of the claims 1 to 7 is utilized as the tool.

## Revendications

1. Outil de soudage par friction-malaxage, comprenant un arbre (1) symétrique en rotation ayant une extrémité proximale (1a), destinée à contacter des partenaires d'assemblage, et, opposée à celle-ci, une extrémité distale (1b) ainsi qu'une tige (2) disposée de façon concentrique autour de l'axe de rotation, qui présente un diamètre inférieur à celui de l'extrémité proximale (1a) de l'arbre et fait donc saillie par rapport à une région d'épaulement (3) de l'arbre ainsi définie; l'arbre, au moins dans cette région d'épaulement (3), ainsi que la tige (2) étant composés ou recouverts d'un matériau composite, qui comprend une base métallique composée essentiellement de molybdène, tungstène, niobium ou tantale ou d'un alliage basé sur au moins un de ces métaux, et des particules dures, incorporées dans la base métallique, ayant une dureté Mohs de ≥ 6 ;
les particules dures incorporées dans la base métallique comprenant au moins un matériau dur qui forme une phase de renforcement dans la base métallique et a une enthalpie libre de formation à 1300 K plus négative que -350 kJ/mol de O₂,
**caractérisé en ce que** le matériau dur a une granulométrie de l'ordre du micromètre, avec un diamètre moyen des particules d'au moins 1 µm.

2. Outil selon la revendication 1, **caractérisé en ce que** la phase de renforcement comprend un ou plusieurs matériaux durs ayant une granulométrie comprise entre 3 et 200 µm, préférentiellement entre 5 et 200 µm, et encore plus préférentiellement entre 10 et 200 µm.

3. Outil selon l'une des revendications 1 ou 2, **caractérisé en ce que** l'au moins un matériau dur est présent dans le matériau à une teneur de 5 à 30 % en volume, préférentiellement de 10 à 20 % en volume.

4. Outil selon l'une quelconque des revendications 1 à 3, **caractérisé en ce que** l'au moins un matériau dur de la phase de renforcement est choisi parmi l'oxyde d'aluminium, l'oxyde de zirconium, l'oxyde d'yttrium et des mélanges de ceux-ci.

5. Outil selon l'une quelconque des revendications précédentes, **caractérisé en ce que** le matériau composite est composé essentiellement de Mo et/ou W ou d'un alliage basé sur ceux-ci.

6. Outil selon l'une quelconque des revendications précédentes, **caractérisé en ce que** le matériau comprend des dispersoïdes ayant des diamètres de particule de l'ordre du micromètre dans une quantité de jusqu'à 5 % en poids.

7. Outil selon l'une quelconque des revendications précédentes, **caractérisé en ce que** la tige (2) est composée d'un matériau composite et **en ce que** la région d'épaulement (3) de l'arbre (1) est revêtue d'une couche composée du matériau composite.

8. Procédé pour soudage par friction-malaxage, **caractérisé en ce qu'**un outil de soudage par friction-malaxage selon l'une quelconque des revendications 1 à 7 est utilisé comme outil.
